(19)

Europäisches Patentamt

European Patent Office

Office européen des brevets

(11) **EP 2 874 395 A2**

(12) **EUROPEAN PATENT APPLICATION**

(43) Date of publication:
20.05.2015 Bulletin 2015/21

(51) Int Cl.:
*H04N 13/00* (2006.01)

(21) Application number: 14192745.9

(22) Date of filing: 12.11.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 18.11.2013 IN CH53132013

(71) Applicant: Nokia Corporation
02610 Espoo (FI)

(72) Inventors:
• Ukil, Soumik
560103 Bangalore (IN)

• Muninder, Veldandi
560037 Bangalore (IN)
• Govindarao, Krishna Annasagar
560050 Bangalore (IN)
• Kumar, Vishal
560047 Bangalore (IN)

(74) Representative: Nokia Corporation
Intellectual Property Department
Karakaari 7
02610 Espoo (FI)

(54) **Method, apparatus and computer program product for disparity estimation**

(57) In an example embodiment, a method, apparatus and computer program product are provided. The method includes facilitating access of a first image and a second image associated with a scene. The first image and the second image includes depth information and at least one non-redundant portion. A first disparity map of the first image is computed based on the depth information associated with the first image. At least one region of interest (ROI) associated with the at least one non-redundant portion is determined in the first image based on the depth information associated with the first image. A second disparity map of at least one region in the second image corresponding to the at least one ROI of the first image is computed. The first disparity map and the second disparity map are merged to estimate an optimized depth map of the scene.

| Facilitate access of a first image and a second image associated with a scene, the first image and the second image comprising a depth information, the first image and the second image comprising at least one non-redundant portion | 502 |

| Compute a first disparity map of the first image based on the depth information associated with the first image | 504 |

| Determine at least one region of interest (ROI) associated with the at least one non-redundant portion in the first image, the at least one ROI being determined based on the depth information associated with the first image | 506 |

| Compute a second disparity map of at least one region in the second image corresponding to the at least one ROI of the first image | 508 |

| Merge the first disparity map and the second disparity map to estimate an optimized depth map of the scene | 510 |

500

FIGURE 5

EP 2 874 395 A2

**Description**

TECHNICAL FIELD

Various implementations relate generally to method, apparatus, and computer program product for disparity estimation in images.

BACKGROUND

Various electronic devices such as cameras, mobile phones, and other devices are now used for capturing multiple multimedia content such as two or more images of a scene. Such capture of the images, for example, stereoscopic images may be used for detection of objects and post processing applications. Some post processing applications include disparity/depth estimation of the objects in the multimedia content such as images, videos and the like. Although, electronic devices are capable of supporting applications that capture the objects in the stereoscopic images and/or videos; however, such capturing and post processing applications such as disparity estimation involve intensive computations.

SUMMARY OF SOME EMBODIMENTS

Various aspects of example embodiments are set out in the claims.

In a first aspect, there is provided a method comprising: facilitating access of a first image and a second image associated with a scene, the first image and the second image comprising a depth information, the first image and the second image comprising at least one non-redundant portion; computing a first disparity map of the first image based on the depth information associated with the first image; determining at least one region of interest (ROI) associated with the at least one non-redundant portion in the first image, the at least one ROI being determined based on the depth information associated with the first image; computing a second disparity map of at least one region in the second image corresponding to the at least one ROI of the first image; and merging the first disparity map and the second disparity map to estimate an optimized depth map of the scene.

In a second aspect, there is provided an apparatus comprising at least one processor; and at least one memory comprising computer program code, the at least one memory and the computer program code configured to, with the at least one processor, cause the apparatus to perform at least: facilitate access of a first image and a second image associated with a scene, the first image and the second image comprising a depth information, the first image and the second image comprising at least one non-redundant portion; compute a first disparity map of the first image based on the depth information associated with the first image; determine at least one region of interest (ROI) associated with the at least one non-redundant portion in the first image, the at least one ROI being determined based on the depth information associated with the first image; compute a second disparity map of at least one region in the second image corresponding to the at least one ROI of the first image; and merge the first disparity map and the second disparity map to estimate an optimized depth map of the scene.

In a third aspect, there is provided a computer program product comprising at least one computer-readable storage medium, the computer-readable storage medium comprising a set of instructions, which, when executed by one or more processors, cause an apparatus to perform at least: facilitate access of a first image and a second image associated with a scene, the first image and the second image comprising a depth information, the first image and the second image comprising at least one non-redundant portion; compute a first disparity map of the first image based on the depth information associated with the first image; determine at least one region of interest (ROI) associated with the at least one non-redundant portion in the first image, the at least one ROI being determined based on the depth information associated with the first image; compute a second disparity map of at least one region in the second image corresponding to the at least one ROI of the first image; and merge the first disparity map and the second disparity map to estimate an optimized depth map of the scene.

In a fourth aspect, there is provided an apparatus comprising: means for facilitating access of a first image and a second image associated with a scene, the first image and the second image comprising a depth information, the first image and the second image comprising at least one non-redundant portion; means for computing a first disparity map of the first image based on the depth information associated with the first image; means for determining at least one region of interest (ROI) associated with the at least one non-redundant portion in the first image, the at least one ROI being determined based on the depth information associated with the first image; means for computing a second disparity map of at least one region in the second image corresponding to the at least one ROI of the first image; and means for merging the first disparity map and the second disparity map to estimate an optimized depth map of the scene.

In a fifth aspect, there is provided a computer program comprising program instructions which when executed by an apparatus, cause the apparatus to: facilitate access of a first image and a second image associated with a scene, the first image and the second image comprising a depth information, the first image and the second image comprising at least one non-redundant portion; compute a first disparity map of the first image based on the depth information associated with the first image; determine at least one region of interest (ROI) associated with the at least one non-redundant portion in the first image, the at least one ROI being determined based on the depth information associated with the first image; compute a second disparity map of at least one region in the second image corresponding to the at least one ROI of the first image; and merge the first disparity map and the second disparity map to estimate an optimized depth map of the scene.

## BRIEF DESCRIPTION OF THE FIGURES

Various embodiments are illustrated by way of example, and not by way of limitation, in the figures of the accompanying drawings in which:

FIGURE 1 illustrates a device, in accordance with an example embodiment;
FIGURE 2 illustrates an example block diagram of an apparatus, in accordance with an example embodiment;
FIGURES 3A and 3B illustrates example representations of a pair of stereoscopic images, in accordance with an example embodiment;
FIGURE 3C illustrates example representation of segmentation of the pair of stereoscopic images illustrated in FIGURES 3A and 3B, in accordance with an example embodiment;
Figure 3D illustrates an example representation of a super-pixel segmentation of a second image using a disparity map of a first image, in accordance with an example embodiment;
FIGURES 4A through 4D illustrate example representation of steps for disparity estimation, in accordance with an example embodiment;
FIGURE 5 is a flowchart depicting an example method, in accordance with an example embodiment; and
FIGURE 6 is a flowchart depicting an example method for disparity estimation, in accordance with another example embodiment.

## DETAILED DESCRIPTION

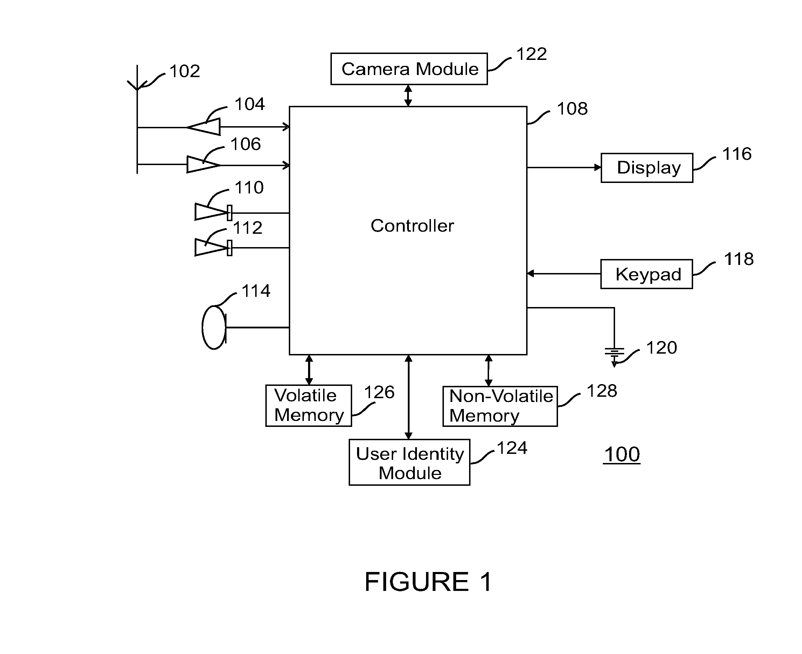

Example embodiments and their potential effects are understood by referring to FIGURES 1 through 6 of the drawings.
FIGURE 1 illustrates a device 100 in accordance with an example embodiment. It should be understood, however, that the device 100 as illustrated and hereinafter described is merely illustrative of one type of device that may benefit from various embodiments, therefore, should not be taken to limit the scope of the embodiments. As such, it should be appreciated that at least some of the components described below in connection with the device 100 may be optional and thus in an example embodiment may include more, less or different components than those described in connection with the example embodiment of FIGURE 1. The device 100 could be any of a number of types of electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.
The device 100 may include an antenna 102 (or multiple antennas) in operable communication with a transmitter 104 and a receiver 106. The device 100 may further include an apparatus, such as a controller 108 or other processing device that provides signals to and receives signals from the transmitter 104 and receiver 106, respectively. The signals may include signaling information in accordance with the air interface standard of the applicable cellular system, and/or may also include data corresponding to user speech, received data and/or user generated data. In this regard, the device 100 may be capable of operating with one or more air interface standards, communication protocols, modulation types, and access types. By way of illustration, the device 100 may be capable of operating in accordance with any of a number of first, second, third and/or fourth-generation communication protocols or the like. For example, the device 100 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA1000, wideband CDMA (WCDMA) and time division-synchronous CDMA (TD-SCDMA), with 3.9G wireless communication protocol such as evolved-universal terrestrial radio access network (E-UTRAN), with fourth-generation (4G) wireless communication protocols, or the like. As an alternative (or additionally), the device 100 may be capable of operating in accordance with non-cellular communication mechanisms. For example, computer networks such as the Internet, local area network, wide area networks, and the like; short range wireless communication networks such as Bluetooth® networks, Zigbee® networks, Institute of Electric and Electronic Engineers (IEEE) 802.11x networks, and the like; wireline telecommunication networks such as public switched telephone network (PSTN).
The controller 108 may include circuitry implementing, among others, audio and logic functions of the device 100. For example, the controller 108 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 100 are allocated between these devices according to their respective capabilities. The controller 108 thus may also include the functionality to convolutionally encode and interleave message and data prior to modulation and transmission. The controller 108 may additionally include an internal voice coder, and may include an internal data modem. Further, the controller 108 may include functionality to operate one or more software programs, which may be stored in a memory. For example, the controller 108 may be capable of operating a connectivity program, such as a conventional Web browser. The connectivity program may then allow the device 100 to transmit and receive Web content, such as location-based content and/or other web page content, according to a Wireless Application Protocol (WAP), Hypertext Transfer Protocol (HTTP) and/or the like. In an example embodiment, the controller 108 may be embodied as a multi-core processor such as a dual or quad core processor. However, any number of processors may be included in the controller 108.

The device 100 may also comprise a user interface including an output device such as a ringer 110, an earphone or speaker 112, a microphone 114, a display 116, and a user input interface, which may be coupled to the controller 108. The user input interface, which allows the device 100 to receive data, may include any of a number of devices allowing the device 100 to receive data, such as a keypad 118, a touch display, a microphone or other input device. In embodiments including the keypad 118, the keypad 118 may include numeric (0-9) and related keys (#, *), and other hard and soft keys used for operating the device 100. Alternatively or additionally, the keypad 118 may include a conventional QWERTY keypad arrangement. The keypad 118 may also include various soft keys with associated functions. In addition, or alternatively, the device 100 may include an interface device such as a joystick or other user input interface. The device 100 further includes a battery 120, such as a vibrating battery pack, for powering various circuits that are used to operate the device 100, as well as optionally providing mechanical vibration as a detectable output.

In an example embodiment, the device 100 includes a media-capturing element, such as a camera, video and/or audio module, in communication with the controller 108. The media-capturing element may be any means for capturing an image, video and/or audio for storage, display or transmission. In an example embodiment in which the media-capturing element is a camera module 122, the camera module 122 may include a digital camera (or array of multiple cameras) capable of forming a digital image file from a captured image. As such, the camera module 122 includes all hardware, such as a lens or other optical component(s), and software for creating a digital image file from a captured image. Alternatively, the camera module 122 may include the hardware needed to view an image, while a memory device of the device 100 stores instructions for execution by the controller 108 in the form of software to create a digital image file from a captured image. In an example embodiment, the camera module 122 may further include a processing element such as a co-processor, which assists the controller 108 in processing image data and an encoder and/or decoder for compressing and/or decompressing image data. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264, H.264/MPEG-4, MPEG-4, and the like. In some cases, the camera module 122 may provide live image data to the display 116. Moreover, in an example embodiment, the display 116 may be located on one side of the device 100 and the camera module 122 may include a lens positioned on the opposite side of the device 100 with respect to the display 116 to enable the camera module 122 to capture images on one side of the device 100 and present a view of such images to the user positioned on the other side of the device 100. Practically, the camera module(s) can also be on anyside, but normally on the opposite side of the display 116 or on the same side of the display 116 (for example, video call cameras). The device 100 may further include a user identity module (UIM) 124. The UIM 124 may be a memory device having a processor built in. The UIM 124 may include, for example, a subscriber identity module (SIM), a universal integrated circuit card (UICC), a universal subscriber identity module (USIM), a removable user identity module (R-UIM), or any other smart card. The UIM 124 typically stores information elements related to a mobile subscriber. In addition to the UIM 124, the device 100 may be equipped with memory. For example, the device 100 may include volatile memory 126, such as volatile random access memory (RAM) including a cache area for the temporary storage of data. The device 100 may also include other non-volatile memory 128, which may be embedded and/or may be removable. The non-volatile memory 128 may additionally or alternatively comprise an electrically erasable programmable read only memory (EEPROM), flash memory, hard drive, or the like. The memories may store any number of pieces of information, and data, used by the device 100 to implement the functions of the device 100.

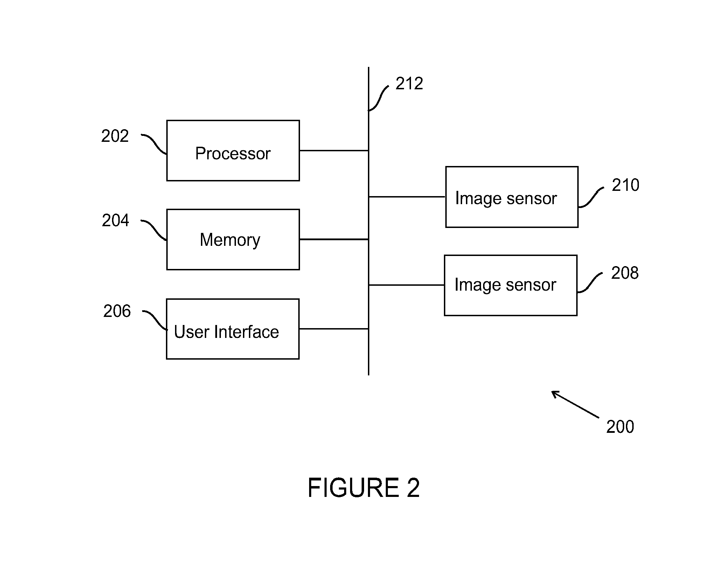

FIGURE 2 illustrates an apparatus 200 for disparity estimation in multimedia content associated with a scene, in accordance with an example embodiment. The apparatus 200 may be employed, for example, in the device 100 of FIGURE 1. However, it should be noted that the apparatus 200, may also be employed on a variety of other devices both mobile and fixed, and therefore, embodiments should not be limited to application on devices such as the device 100 of FIGURE 1. Alternatively, embodiments may be employed on a combination of devices including, for example, those listed above. Accordingly, various embodiments may be embodied wholly at a single device, (for example, the device 100) or in a combination of devices.

Furthermore, it should be noted that the devices or elements described below may not be mandatory and thus some may be omitted in certain embodiments.

The apparatus 200 includes or otherwise is in communication with at least one processor 202 and at least one memory 204. Examples of the at least one memory 204 include, but are not limited to, volatile and/or non-volatile memories. Some examples of the volatile memory include, but are not limited to, random access memory, dynamic random access memory, static random access memory, and the like. Some examples of the non-volatile memory include, but are not limited to, hard disks, magnetic tapes, optical disks, programmable read only memory, erasable programmable read only memory, electrically erasable programmable read only memory, flash memory, and the like. The memory 204 may be configured to store information, data, applications, instructions or the like for enabling the apparatus 200 to carry out various functions in accordance with various example embodiments. For example, the memory 204 may be configured to buffer input data comprising media content for processing by the processor 202. Additionally or alternatively, the memory 204 may be configured to store instructions for execution by the processor 202.

An example of the processor 202 may include the controller 108. The processor 202 may be embodied in a number of different ways. The processor 202 may be embodied as a multi-core processor, a single core processor; or combination of multi-core processors and single core processors. For example, the processor 202 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 204 or otherwise accessible to the processor 202. Alternatively or additionally, the processor 202 may be configured to execute hard coded functionality. As such, whether configured by hardware or software methods, or by a combination thereof, the processor 202 may represent an entity, for example, physically embodied in circuitry, capable of performing operations according to various embodiments while configured accordingly. For example, if the processor 202 is embodied as two or more of an ASIC, FPGA or the like, the processor 202 may be specifically configured hardware for conducting the operations described herein. Alternatively, as another example, if the processor 202 is embodied as an executor of software instructions, the instructions may specifically configure the processor 202 to perform the algorithms and/or operations described herein when the instructions are executed. However, in some cases, the processor 202 may be a processor of a specific device, for example, a mobile terminal or network device adapted for employing embodiments by further configuration of the processor 202 by instructions for performing the algorithms and/or operations described herein. The processor 202 may include, among other things, a clock, an arithmetic logic unit (ALU) and logic gates configured to support operation of the processor 202.

A user interface (UI) 206 may be in communication with the processor 202. Examples of the user interface 206 include, but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 206 may include, among other devices or elements, any or all of a speaker, a microphone, a display, and a keyboard, touch screen, or the like. In this regard, for example, the processor 202 may comprise user interface circuitry configured to control at least some functions of one or more elements of the user interface 206, such as, for example, a speaker, ringer, microphone, display, and/or the like. The processor 202 and/or user interface circuitry comprising the processor 202 may be configured to control one or more functions of one or more elements of the user interface 206 through computer program instructions, for example, software and/or firmware, stored on a memory, for example, the at least one memory 204, and/or the like, accessible to the processor 202.

In an example embodiment, the apparatus 200 may include an electronic device. Some examples of the electronic device include communication device, media capturing device with communication capabilities, computing devices, and the like. Some examples of the electronic device may include a mobile phone, a personal digital assistant (PDA), and the like. Some examples of computing device may include a laptop, a personal computer, and the like. Some examples of electronic device may include a camera. In an example embodiment, the electronic device may include a user interface, for example, the UI 206, having user interface circuitry and user interface software configured to facilitate a user to control at least one function of the electronic device through use of a display and further configured to respond to user inputs. In an example embodiment, the electronic device may include a display circuitry configured to display at least a portion of the user interface of the electronic device. The display and display circuitry may be configured to facilitate the user to control at least one function of the electronic device. In an example embodiment, the electronic device may be embodied as to include a transceiver. The transceiver may be any device operating or circuitry operating in accordance with software or otherwise embodied in hardware or a combination of hardware and software. For example, the processor 202 operating under software control, or the processor 202 embodied as an ASIC or FPGA specifically configured to perform the operations described herein, or a combination thereof, thereby configures the apparatus 200 or circuitry to perform the functions of the transceiver. The transceiver may be configured to receive media content. Examples of media content may include images, audio content, video content, data, and a combination thereof.

In an example embodiment, the electronic device may be embodied as to include at least one image sensor, such as an image sensor 208 and image sensor 210. Though only two image sensors 208 and 210 are shown in the example representation of FIGURE 2, but the electronic device may include more than two image sensors or only one image sensor. The image sensors 208 and 210 may be in communication with the processor 202 and/or other components of the apparatus 200. The image sensors 208 and 210 may be in communication with other imaging circuitries and/or software, and are configured to capture digital images or to capture video or other graphic media. The image sensors 208 and 210 and other circuitries, in combination, may be example of at least one camera module such as the camera module 122 of the device 100. The image sensors 208 and 210, along with other components may also be configured to capture a plurality of multimedia content, for example images, videos, and the like depicting a scene from different positions (or different angles). In an example embodiment, the image sensors 208 and 210 may be accompanied with corresponding lenses to capture two views of the scene, such as stereoscopic views. In an alternate embodiment, there may be a single camera module having an image sensor used to capture an image of the scene from a position (x), and then move through a distance (e.g., 10 meters) to another position (y) and capture another image of the scene.

These components (202-210) may communicate to each other via a centralized circuit system 212 to perform disparity estimation in multiple multimedia contents associated with the scene. The centralized circuit system 212 may be various devices configured to, among other things, provide or enable communication between the components (202-210) of the apparatus 200. In certain embodiments, the centralized circuit system 212 may be a central printed circuit board (PCB) such as a motherboard, main board, system board, or logic board. The centralized circuit system 212 may also, or alternatively, include other printed circuit assemblies (PCAs) or communication channel media.

In an example embodiment, the processor 202 is configured to, with the content of the memory 204, and optionally with other components described herein, to cause the apparatus 200 to facilitate access of a first image and a second image. In an embodiment, the first image and the second image may comprise slightly different views of a scene comprising one or more objects. In an example embodiment, the first image and the second image of the scene may be captured such that there exists a disparity in at least one object point of the scene between the first image and the second image. In an example embodiment, the first image and the second image may form a stereoscopic pair of images. For example, a stereo camera may capture the first image and the second image, such that, the first image includes a slight parallax with the second image representing the same scene. In some other example embodiments, the first image and the second image may also be received from a camera capable of capturing multiple views of the scene, for example, a multi-baseline camera, an array camera, a plenoptic camera and a light field camera. In some example embodiments, the first image and the second image may be prerecorded or stored in an apparatus, for example the apparatus 200, or may be received from sources external to the apparatus 200. In such example embodiments, the apparatus 200 is caused to receive the first image and the second image from external storage medium such as DVD, Compact Disk (CD), flash drive, memory card, or from external storage locations through Internet, Bluetooth®, and the like. In an example embodiment, a processing means may be configured to facilitate access of the first image and the second image of the scene comprising one or more objects, where there exists a disparity in at least one object of the scene between the first image and the second image. An example of the processing means may include the processor 202, which may be an example of the controller 108, and/or the image sensors 208 and 210.

In an embodiment, the first image and the second image may include various portions being located at different depths with respect to a reference location. In an embodiment, the 'depth' of a portion in an image may refer to a distance of the object points (for example, pixels) constituting the portion from a reference location, such as a camera location. In an embodiment, the first image and the second image may include depth information for various object points associated with the respective images.

In an embodiment, since the first image and the second image may be associated with same scene, the first image and the second image may include redundant portions and at least one non-redundant portion. For example, an image of the scene captured from a left side of objects may include greater details of left side portions of the objects of the scene as compared to the right side portions of the objects, while the right side portions of the objects may be occluded. Similarly, an image of the scene captured from a right side of objects in the image may include greater details of right side portions of the objects of the scene while the left side portions of the objects may be occluded. In an embodiment, the portions of the two images that may be occluded in either the first image or the second image may be the non-redundant portions of the respective images, while rest of the portions of the two images may be redundant portions between the images. In an example embodiment, an image of a scene captured from different positions may include substantially same background portion but different foreground portions, so the background portions in the two images of the scene may be redundant portion in the images while the certain regions of the foreground portions may be non-redundant. For example, for a scene comprising a person standing in a garden, images may be captured from right side of the person and left side of the person. The images may illustrate different views of the person, for example, the image captured from the right side of the person may include greater details of right side body portions as compared to the left side body portions of the person, while the image captured from the left side of the person may include greater details of left side body portions of the person as compared to the right side body portions. However, background objects in both the images may be substantially similar, for example, the scene of the garden may include plants, trees, water fountains, and the like in the background of the person and such background objects may be substantially similarly illustrated in both the images.

In an example embodiment, the first image and the second image accessed by the apparatus 200 may be rectified stereoscopic pair of images with respect to each other. In some example embodiments, instead of accessing the rectified stereoscopic pair of images, the apparatus 200 may be caused to access at least one stereoscopic pair of images that may not be rectified. In an embodiment, the apparatus 200 may be caused to rectify the at least one stereoscopic pair of images to generate rectified images such as the first image and the second image. In such example embodiments, the processor 202 is configured to, with the content of the memory 204, and optionally with other components described herein, to cause the apparatus 200 to rectify one of the stereoscopic pair of images with respect to the other image such that a row (for example, a horizontal line) in the image may correspond to a row (for example, a horizontal line) in the other image. In an example embodiment, an orientation of one of the at least one stereoscopic pair of images may be changed relative to the other image such that, a horizontal line passing through a point in one of the image may correspond to an epipolar line associated with the point in the other image. In an example embodiment, due to epipolar constraints in the stereoscopic pair of images, every object point in one image has a corresponding epipolar line in the other image. For example, due to the epipolar constraints, for an object point of the first image, a corresponding object point may be present at an epipolar line in the second image, where the epipolar line is a corresponding epipolar line for the object point of the first image. In an example embodiment, a processing means may be configured to rectify the at least one stereoscopic pair of images such that a horizontal line in the one of the image may correspond to a horizontal line in the other image of the at least one pair of stereoscopic images. An example of the processing means may include the processor 202, which may be an example of the controller 108.

In an embodiment, the processor 202 is configured to, with the content of the memory 204, and optionally with other components described herein, to cause the apparatus 200 to perform a segmentation of the first image. In an example embodiment, the segmentation of the first image may be performed by parsing the first image into a plurality of super-pixels. In an example embodiment, the first image may be parsed into the plurality of super-pixels based on features such as dimensions, color, texture and edges associated with various portions of the first image. In an example embodiment, a processing means may be configured to perform segmentation of the first image into the plurality of super-pixels. An example of the processing means may include the processor 202, which may be an example of the controller 108.

In an embodiment, the processor 202 is configured to, with the content of the memory 204, and optionally with other components described herein, to cause the apparatus 200 to associate a plurality of disparity labels with the plurality of super-pixels. In an embodiment, a super pixel or a group of super-pixels from the plurality of super-pixels may be assigned a disparity label. In an example embodiment, for computing the disparity map for the image and subsequently segmenting an image such as the first image, the apparatus 200 is caused to assign a disparity label to the super-pixels and/or the group of super-pixels based on a distance thereof from the camera.

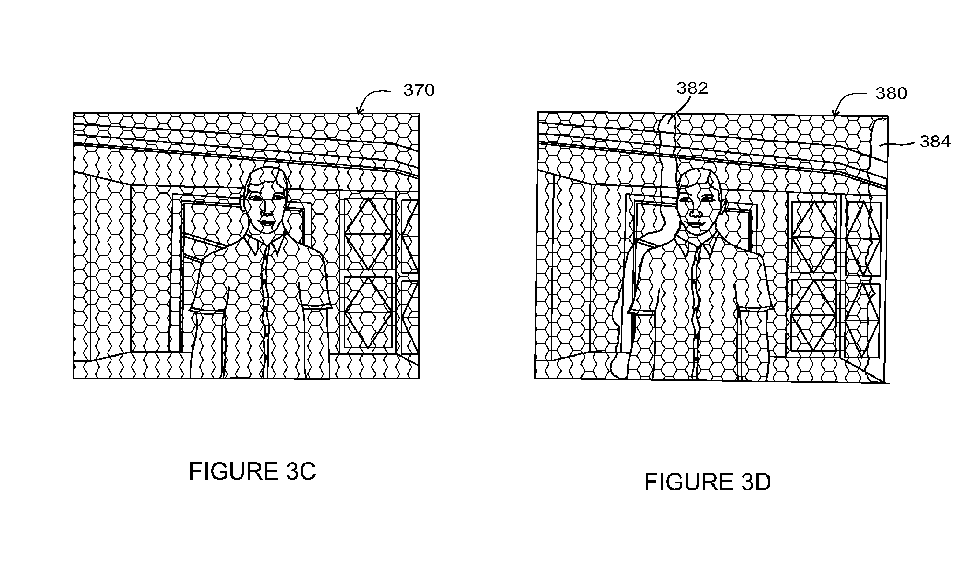

In an example embodiment, the processor 202 is configured to, with the content of the memory 204, and optionally with other components described herein, to cause the apparatus 200 to perform the segmentation of the second image into a corresponding plurality of super-pixels. In an embodiment, the second image may be segmented based on the plurality of super-pixels associated with the first image. For example, the plurality of super-pixels of the first image may be utilized in initialization of centers of the corresponding plurality of super-pixels of the second image. In an embodiment, the utilization of the super-pixels of the first image for center initialization of the super-pixels of the second image may facilitate in reducing the computation effort associated with the segmentation of the second image into the corresponding plurality of super-pixels. An example of segmentation of the second image based on the segmentation of the first image is described in detail with reference to FIGURE 3C.

In an embodiment, since the first image and the second image includes slightly shifted views of the same scene, the plurality of disparity labels associated with the portions and/or objects of the first image may be associated with corresponding portions and/or objects of the second image. In an embodiment, the processor 202 is configured to, with the content of the memory 204, and optionally with other components described herein, to cause the apparatus 200 to associate a corresponding plurality of disparity labels corresponding to the plurality of disparity labels with the second image. In an embodiment, the corresponding plurality of disparity labels may be determined from among the plurality of disparity labels. In an embodiment, the corresponding plurality of disparity labels may include those disparity labels from the plurality of disparity labels that may be associated with a non-zero instances and/or count of occurrence. In an embodiment, the corresponding plurality of disparity labels may be determined by computing an occurrence count of the plurality of super-pixels in the first disparity map, and determining those disparity labels that may be associated with the non-zero occurrence count of the super-pixels. In an embodiment, the occurrence count of the plurality of pixels may be determined by generating a histogram of a number of pixels versus the disparity values of the plurality of super-pixels associated with the first disparity map. In an embodiment, associating the plurality of disparity labels of the first image to the second image facilitates in reducing computation involved in searching for disparity labels on the second image.

In an example embodiment, the processor 202 is configured to, with the content of the memory 204, and optionally with other components described herein, to cause the apparatus 200 to compute a first disparity map of the first image. In an embodiment, the computation of the first disparity map may pertain to computation of disparity values for objects associated with the first image. In an embodiment, the term 'disparity' may describe an offset of the object point (for example, a super-pixel) in an image (for example, the first image) relative to a corresponding object point (for example, a corresponding super-pixel) in another image (for example, the second image). In an example embodiment, the first disparity map may be determined based on the depth information of the object points associated with the regions of the first image. In an embodiment, the processor 202 is configured to, with the content of the memory 204, and optionally with other components described herein, to cause the apparatus 200 to compute the first disparity map based on computation of disparity values between the plurality of super-pixels associated with the first image and the corresponding plurality of super-pixels associated with the second image.

In an embodiment, the first disparity map may include disparity leaking corresponding to the non-redundant portions of the first image (for example, the portions present in only one of the first image and absent in the second image). For example, a disparity map of an image captured from the right side of the scene may include disparity leaking in the right side of corresponding disparity map. In an embodiment, disparity leaking may be attributed at least to an absence of matching object points (for example, pixels or super-pixels) associated with the non-redundant portions of an image in other images of the scene. In an embodiment, the phenomenon of disparity leaking may also be attributed to the method of computing disparity map such as graph cuts method, local window based methods, and the like. In an example scenario, the non-redundant portions may include occluded portions in different views of the scene. In an embodiment, the effect of occlusion may be pronounced in the foreground regions of the image that may include objects close to the image capturing device.

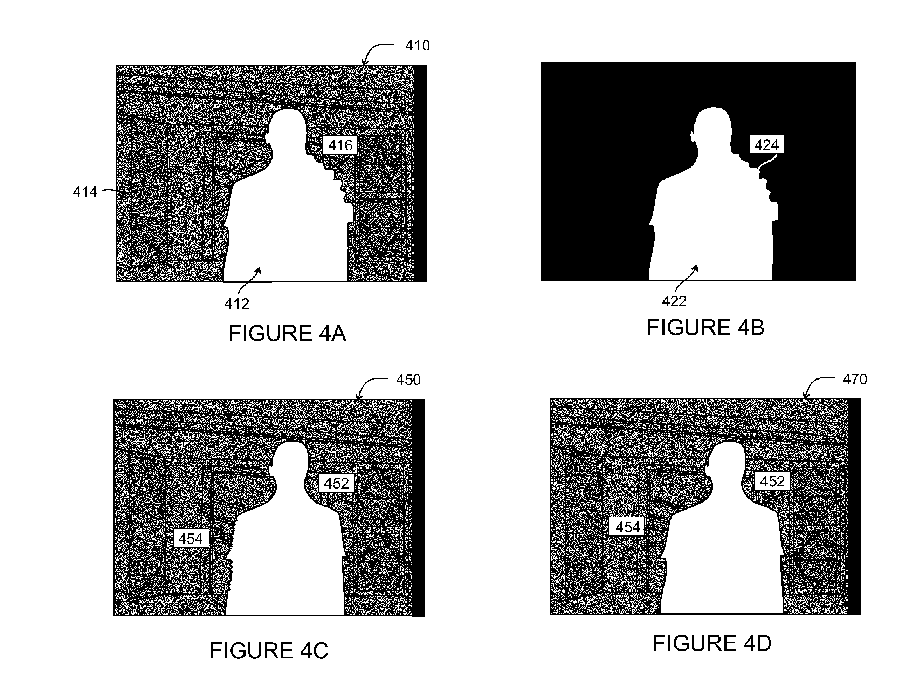

In an embodiment, the at least one non-redundant portion may be present in the first image and absent in the second image. In another example embodiment, the at least one non-redundant portion may be present in the second image and absent in the first image. In an embodiment, the at least one non-redundant portion in the first image may be determined based on a matching some or all super-pixels in the first image to the corresponding super-pixels in the second image. In an embodiment, the matching of super-pixels of the first image with the corresponding super-pixels of the second image may include matching features of the first image and the second image. Examples of matching features may include matching dimensions, color, texture and edges of object points in the first image and the second image. The phenomenon of disparity leaking for non-redundant portions of an image such as foreground regions is further illustrated and explained with reference to FIGURE 4A.

As discussed, the effect due to occlusion is more pronounced in the foreground region of the images of the scene. However, for the background portions the occluded regions may be substantially smaller such that the disparity map of the background region of the first image may be substantially similar to the disparity map of the background portion of the second image. In an embodiment, the disparity leaking in the first disparity map may be corrected by computing a second disparity map for regions, for example, at least one region of interest (ROI) of the first image having disparity leaking, and merging the first disparity map with the second disparity map.

In an embodiment, the processor 202 is configured to, with the content of the memory 204, and optionally with other components described herein, to cause the apparatus 200 to determine at least one ROI associated with the at least one non-redundant portion in the first image. In an embodiment, the at least one ROI may be determined based on a depth information associated with the first image and the second image. In an embodiment, the apparatus 200 is caused to determine the at least one region in the first image that may be associated with a depth less than or equal to a threshold depth. Herein, the term 'depth' of a portion in an image (for example, the first image) may refer to the distance of the pixels and/or super-pixels constituting the portion from a reference location, such as a camera location. In an embodiment, the at least one region in the first image having a depth less than or equal to the threshold depth may correspond to the regions having super-pixels located at a distance less than or equal to the threshold depth from the reference location, such as the camera. In an embodiment, the at least one region associated with the threshold depth may be the at least one non-redundant region of the first image. In an example embodiment, the region associated with the depth less than the threshold depth may be a foreground portion associated with the scene while the region associated with a depth greater than the threshold depth may be a background portion of the scene. In an embodiment, the determination of the ROI of the first image may facilitate in optimization of that area of the second image which may be utilized for disparity estimations.

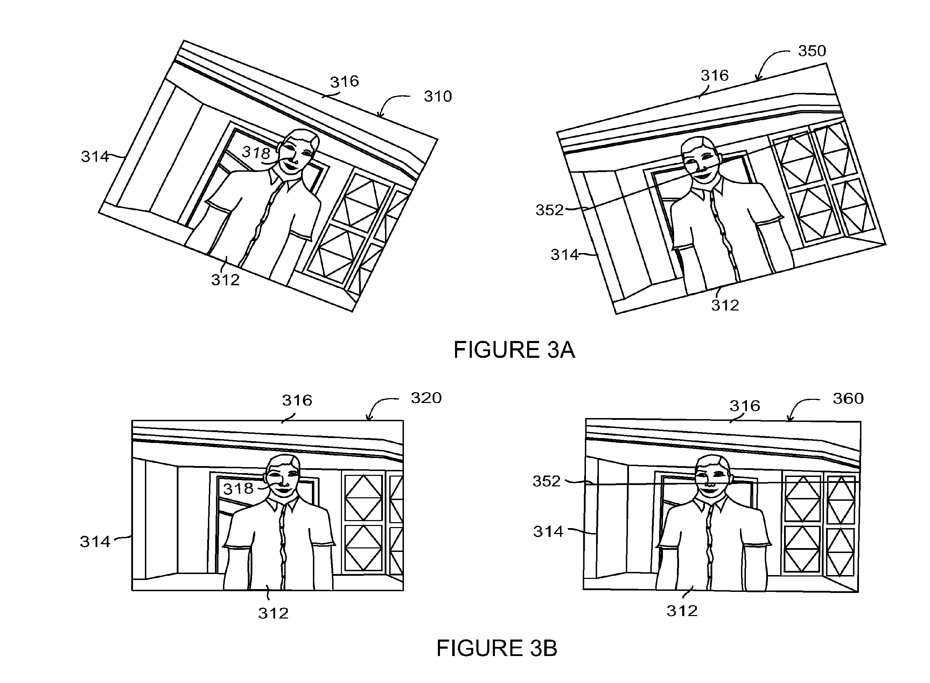

In an example embodiment, the processor 202 is configured to, with the content of the memory 204, and optionally with other components described herein, to cause the apparatus 200 to compute a second disparity map of at least one region in the second image corresponding to the at least one ROI of the first image. In an embodiment, wherein the first disparity map comprises a right view disparity map, the second disparity map may include a left view disparity map of the region corresponding to the ROI in the first image. In an embodiment, the processor 202 is configured to, with the content of the memory 204, and optionally with other components described herein, to cause the apparatus 200 to merge the first disparity map and the second disparity map for estimating an optimized depth map of the scene. In an embodiment, the optimized depth map of the scene may be indicative of an optimized depth information of the scene being derived from different views of the scene. An example optimized depth map generated on combining the first disparity map and the second disparity map is illustrated and described further with reference to FIGURE 4D. Some example embodiments of disparity estimation are further described with reference to FIGURES 3A to 3C and 4A to 4D. As disclosed herein, FIGURES 3A to 3C and 4A to 4D represent one or more example embodiments only, and should not be considered limiting to the scope of the various example embodiments.

As discussed above, the apparatus 200 is configured to receive a pair of stereoscopic images associated with a scene, and determine an optimized depth map of the scene based on the disparity map of the first image and the disparity map of at least one region of the second image. In an embodiment, the images may include consecutive frames of a video content such that the apparatus 200 may be caused to determine an optimized depth map of the scene depicted in the video content based on the depth maps of at least one portions of the consecutive frames. Also, the terms 'disparity' and 'depth' may be used interchangeably in various embodiments. In an embodiment, the disparity is inversely proportional to the depth of the scene. The disparity may be related to the depth as per the following equation:

$$D \propto f.b/d,$$

where, D described the depth, b represents baseline between two cameras capturing the pair of stereoscopic image, for example, the first image and the second image, f is the focal length for each camera, and d is the disparity value for two corresponding object points.

In an example embodiment, the disparity map can be calculated based on following equation:

$$D = f.b/d,$$

Herein, the apparatus 200 is caused to receive at least one pair of stereoscopic images. In the description of FIGURE 2, it is assumed that the at least one pair of stereoscopic images includes two images, namely the first image and the second image. In alternate embodiments, the at least one pair of stereoscopic images may include more than one pair of stereoscopic images. For example, the at least one pair of stereoscopic images may include three images (for example, a first image, a second image and a third image) such that the three images may be three consecutive images of a scene, thereby constituting two pairs of stereoscopic images. In an embodiment, the apparatus 200 may be caused to utilize two pairs of stereoscopic images for determining the optimized depth map of the scene. For example, the apparatus 200 may determine a first disparity map, a second disparity map and a third disparity map corresponding to the first image, a first ROI in the second image and a second ROI in the third image, respectively; and merge the first disparity map, the second disparity map and the third disparity map to generate an optimized depth map of the scene.

FIGURE 3A illustrates an example representation of a pair of stereoscopic images of a scene, in accordance with an example embodiment. In an example embodiment, a stereo camera may be used to capture the pair of stereoscopic images, such as an image 310 and an image 350 of the scene. An example of the scene may include any visible setup or arrangement of objects such that images of the scene may be captured by a media capturing module, such as the camera module 122 or an image sensor such as the image sensors 208 and 210 (FIGURE 2), where the image 310 slightly differs from the image 350 in terms of position of objects of the scene as captured in the image 310 and the image 350. In an example embodiment, the image 310 and the image 350 may also be captured by a moving camera at two different time instants such that the image 310 corresponds to a right view image of the scene and the second image 350 corresponds to a left view image of the scene. For example, the image 310 may be captured representing the scene and then the camera may be moved through a distance and/or angle to capture the image 350 of the scene. In other examples, the images 310 and 350 may be captured by camera such as multi baseline cameras, array cameras, light-field camera and plenoptic cameras that are capable of capturing multiple views of the scene. In the FIGURE 3A, the image 310 and the image 350 show different views of the scene comprising objects, such as, a person 312 and a background depicted by walls 314 and roof 316 of a room. It should be noted that there may be disparity associated with the objects such as a person 312, and the background (comprising walls 314 and the roof 316) between the pair of stereoscopic images 310 and 350.

In an example, the object points in the image 310 may have corresponding object points located at a corresponding epipolar line in the image 350. In an example embodiment, an object point (for example, a super-pixel point) at a location (x,y) in the image 310 may have a corresponding object point on an epipolar line in the image 350 corresponding to the object point. For example, an object point 318 (a pixel point depicting a nose-tip of the person 312) may have a corresponding object point at an epipolar line 352 in the image 350. Similarly, each object point in the first image 310 may have a corresponding epipolar line in the second image 350.

In an embodiment, the pair of stereoscopic images 310 and 350 may be rectified so as to generate a rectified pair of images, for example, a first image 320 and a second image 360. An example representation of the pair of rectified images such as the first image 320 and the second image 360 are illustrated in FIGURE 3B. In an embodiment, rectifying the images 310 and 350 comprises aligning the images 310 and 350, to generate the images such as the first image 320 and the second image 360, respectively such that horizontal lines (super-pixel rows) of the first image 320 correspond to horizontal lines (super-pixel rows) of the second image 360. It should be noted that the process of rectification for the pair of images 310 and 350 (given the camera parameters, either through direct or weak calibration) transforms planes of the original pair of stereoscopic images 310 and 350 to different planes in the pair of rectified images such as the first image 320 and the second image 360 such that the resulting epipolar lines are parallel and equal along new scan lines. As shown in FIGURES 3A and 3B, the images 310 and 350 are rectified by rotating/adjusting the images 310 and/or 350, such that, the object point rows of the first image 320 correspond to the object point rows of the second image 360.

In an example embodiment, the apparatus 200 is caused to perform super-pixel segmentation of the first image, for example, the first image 310. Referring to FIGURE 3C, an example super-pixel segmentation 370 of an example first image such as the first image 320 is illustrated. The super-pixel segmentation 380 of the first image 320 is illustrated by means of a mesh of super-pixels in FIGURE 3C. In an embodiment, the super-pixel segmentation of the first image 320 may be performed by parsing the first image 320 into a plurality of coherent regions. In an embodiment, the parsing of the first image 320 into the plurality of coherent regions may be performed based on a determination of matching features associated with the object points of the first image 320. Examples of matching features may include matching dimensions, color, texture and edges of the object points in the first image 320. In an embodiment, the super-pixels associated with similar features may be grouped together. In an embodiment, the matching may be performed based on a depth information associated with the super-pixels of the first image 320.

In an embodiment, the super-pixel segmentation of the first image 320 may be utilized for performing super-pixel segmentation of the second image 360. In an embodiment, performing super-pixel segmentation of the second image 360 comprises moving the super-pixel segmentation of the first image 320 onto the second image 360. As illustrated in FIGURE 3C, the super-pixel segmentation 370 of the first image 320 into the plurality of super-pixel is moved to the second image 360 to generate a super-pixel segmentation 380 (FIGURE 3D) of the second image using the disparity map of the first image. In an example embodiment, initially the first disparity map (for example, D1(x,y) of the first image may be generated for every super-pixel centered at a location (x,y) in the first image. Using the information of the first disparity map D1(x,y), the super-pixels of the first image may be moved to second image to form the corresponding super-pixels centered at location for example, the location (x+D1(x,y), y) in the second image. In this manner, the plurality of super pixels in first image may be moved to second image, thereby facilitating in generating the corresponding plurality of super pixels in second image. It may be noted that on moving the super-pixel segmentation 370 associated with the first image 320 onto the second image 360, certain regions such as the region 382, 384 may not be partitioned into the corresponding plurality of super-pixels in the second image due to the disparity between the corresponding object points of the first image 320 and the second image 360.

Herein, the super-pixel segmentation 370 and the super-pixel segmentation 380 are example segmentations of the first image 320 and the second image 360, respectively, and are shown to illustrate the segmentation of the images into a plurality of patches (known as super-pixels). The super-pixel segmentation 370 and the super-pixel segmentation 380 shown in FIGURES 3C and 3D are for illustrative purposes only and, by no way, limit the segmentation to be as shown in FIGURE 3C and FIGURE 3D. It will be noted that super-pixels segmentation is performed based on image features such as dimensions, color, texture and edges of the object points, and accordingly different images are segmented into the super-pixels of different shapes and sizes.

FIGURE 4A, 4B, 4C and 4D illustrate example representation of stages involved in performing disparity estimation for a stereoscopic pair of images, in accordance with an example embodiment. In an embodiment, the stereoscopic pair of images for example, the images 320, 360 (FIGURE 3B) may include a depth information. In an embodiment, the depth information may be indicative of depth of various portions and/or object points being located at different depths with respect to a reference location. Herein, the term 'depth' of a portion in an image may refer to the distance of the pixels and/or super-pixels constituting the portion from a reference location, such as a camera location. For example, as illustrated in FIGURE 3B, the first image 320 includes an image of a person represented by numeral 312, a wall 314, and a roof 316, such that the pixels constituting the person 312 may be located at a depth which may be different from the depth of pixels constituting the wall 314 and/or the roof 316. In an embodiment, a first disparity map may be constructed based on the depth of the plurality of portions and/or objects in the first image that may be located a different depths. A first disparity map 410 associated with the first image such as the first image 320 (FIGURE 3A) is illustrated in FIGURE 4A. As illustrated herein, the first disparity map 410 includes multiple layers of objects associated with the first image 320. The multiple layers indicating different depths of the plurality of objects and/or portions of the first image are shown in different shades. For example, the person 312 of the first image 310 (FIGURE 3A) is shown in white color (depicted by numeral 412) while the background wall 314 is shown in a shade of grey color (depicted by numeral 414).

In an embodiment, the objects associated with non-redundant portions in the first image 320 may cause disparity leaking of disparity values in the first disparity map 410. For example, the first disparity map 410 of the first image 320 includes disparity leaking on a right side portion (illustrated by numeral 416). In an embodiment, the disparity leaking or fattening may be caused due to absence of corresponding object points (such as pixels and/or super-pixels) in other stereoscopic images, for example, the second image since in other images such regions may be occluded. In an embodiment, the apparatus 200 (FIGURE 2) may be caused to correct the disparity errors for such occluded regions (or region of interest) from other images, such as the second image, and merge the disparity map for the occluded regions with the first disparity map to generate a final depth map.

For example, FIGURE 4B illustrates a region of the first disparity map 410 that may be refined using the disparity map of other image, for example, the second image 360 (FIGURE 3B). As illustrated in FIGURE 4B, a ROI 422 corresponding to a foreground portion of the first image 320 may be determined. The ROI 422 is illustrated in white color in FIGURE 4B. As is seen, the ROI 422 comprises a disparity leaking in a portion 424 of the foreground. In an embodiment, the disparity leaking or fattening in the portion 424 may be corrected by computing a disparity map for the ROI 422 from another image, for example, the second image. In an embodiment, a second disparity map may be computed for a portion corresponding to the ROI of the second image.

Referring to FIGURE 4C, a second disparity map 450 of the second image 360 is illustrated. In an embodiment, the second disparity map 450 is computed only for a region (for example, a region 452) of the second image corresponding to the portion 424 (FIGURE 4B) of the ROI. As is seen in FIGURE 4C, the portion 452 of the second disparity map 450 is smoothened and comprises no disparity leaking. In an embodiment, the second disparity map 450 may however show leaking in the portions 454 of the second image. For example, a portion (such as a portion 454 shown in the FIGURE 4C) is present in the first image but absent in the second image, so the second disparity map 450 of the portion 454 includes disparity leaking. In an embodiment, the second disparity map 450 may be merged with the first disparity map 410 to generate an optimized depth map, for example, a depth map 470 illustrated with reference to FIGURE 4D. As seen in FIGURE 4D, the depth map 470 includes smoothened portions such as portions 452, 454 corresponding to non-redundant portions associated with the first image and the second image.

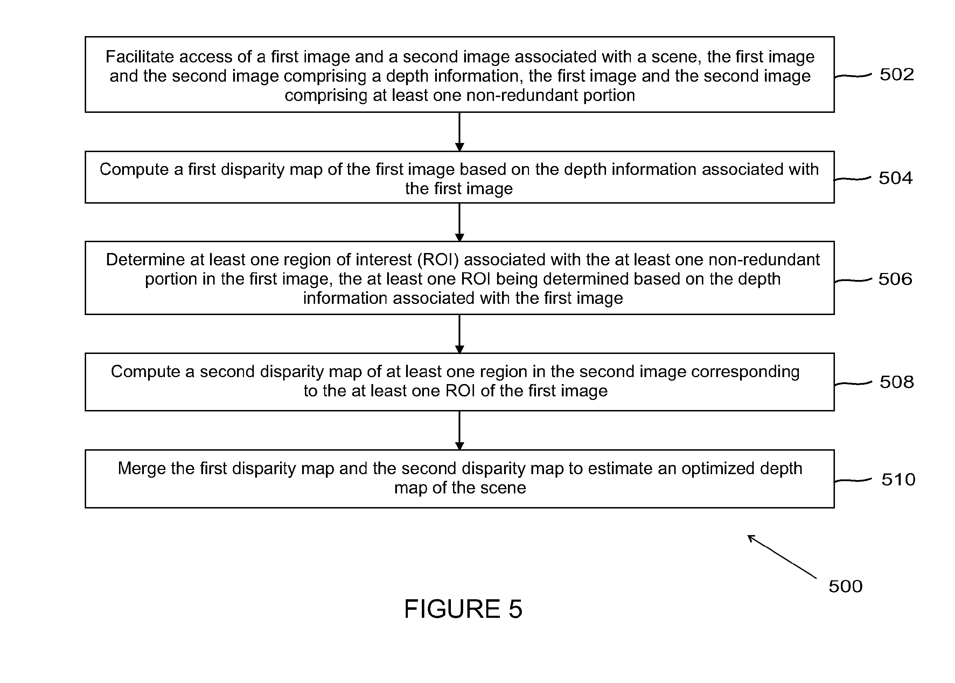

FIGURE 5 is a flowchart depicting an example method 500 for estimating disparity, in accordance with an example embodiment. In an example embodiment, the method 500 includes estimating disparity in images of a scene, where the images of the scene are captured such that there exist a disparity in at least one object of the scene between the images. The method 500 depicted in the flow chart may be executed by, for example, the apparatus 200 of FIGURE 2.

At block 502, the method 500 includes facilitating access of images such as a first image and a second image of the scene. As described in reference to FIGURE 2, the first image and the second image may be accessed from a media capturing device including two sensors and related components, or from external sources such as DVD, Compact Disk (CD), flash drive, memory card, or received from external storage locations through Internet, Bluetooth®, and the like. In an example embodiment, the first image and the second image comprise two different views of the scene. Examples of the first image and the second image may be the images 320 and 360, respectively that are shown and explained with reference to FIGURE 3B.

At block 504, the method 500 includes computing a first disparity map of the first image based on the depth information associated with the first media content. In an embodiment, the first disparity map may be computed based on a matching between the object points associated with the first image and corresponding object points associated with the second image. In an embodiment, the object points of the first image and the corresponding object points of the second image includes super-pixels. An example first disparity map for an example first image is illustrated and described with reference to FIGURE 4A.

In an embodiment, since the first image and the second image are slightly shifted images of the same scene, the first image and the second image may include redundant portions and at least one non-redundant portion. At block 506, at least one ROI associated with the at least one non-redundant portion in the first image is determined. In an embodiment, the at least one ROI may include a region occluded in the second image. In an embodiment, the at least one ROI may be determined based on the depth information associated with the first image. For example, the at least one ROI may include a region of the first image that may have a depth less than a threshold depth. An example ROI for an example first image is illustrated and explained with reference to FIGURE 4B.

At block 508, a second disparity map of at least one region in the second image corresponding to the at least one ROI of the first image may be computed. In an embodiment, the ROI for example, the region occluded in the second image may be visible in the first image. An example second disparity map for an example second image is illustrated and described in FIGURE 4C. In an embodiment, since the second disparity map is computed only for the ROI and not for the entire second image, the method 500 facilitates in saving a substantial computational effort associated with the computation of the disparity of whole of the second image. At block 510, the first disparity map and the second disparity map may be merged for estimating an optimized final depth map of the scene. An example of the optimized depth map is illustrated and explained with reference to FIGURE 4D.

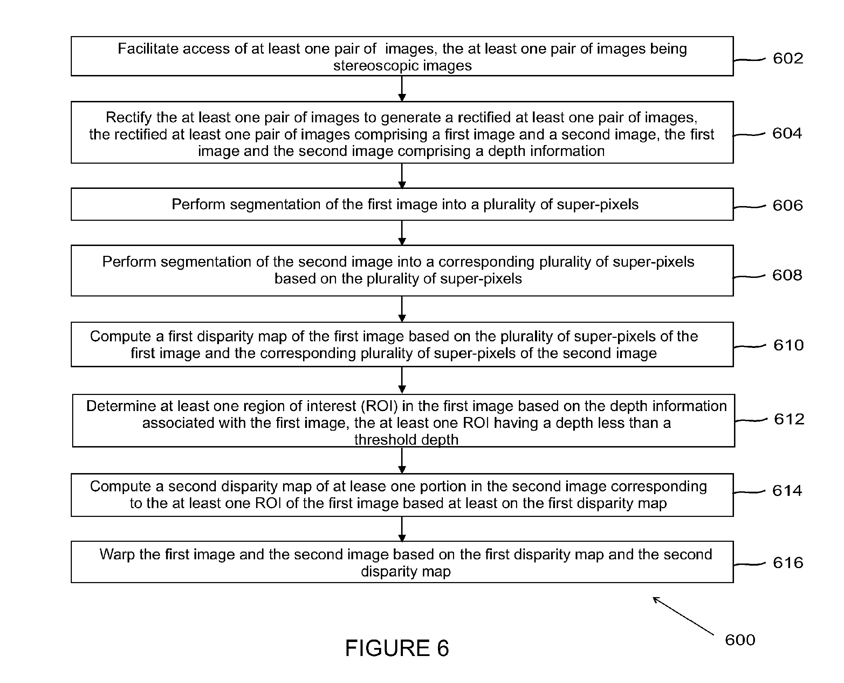

FIGURE 6 is a flowchart depicting an example method 600, in accordance with another example embodiment. The method 600 depicted in the flow chart may be executed by, for example, the apparatus 200 of FIGURE 2. In various examples, the method 600 includes providing computationally effective disparity (or depth) estimation of image associated with a scene. The example embodiment of method 600 is explained with the help of stereoscopic images, but it should be noted that the various operations described in the method 600 may be performed at any two or more images of a scene captured by a multi-baseline camera, an array camera, a plenoptic camera and a light field camera.

At block 602, the method 600 includes facilitating receipt of at least one pair of images. In an embodiment, the at least one pair of images include stereoscopic images. In an embodiment, the at least one pair of image may be captured by a stereo camera. In another embodiment, the at least one pair of image may also be captured by a multi-baseline camera, an array camera, a plenoptic camera or a light-field camera. In certain embodiments, the at least one pair of images may be received at the apparatus 200 or otherwise captured by the sensors. In an embodiment, the at least one pair of images may not be rectified images with respect to each other. In such cases, the method 600 (at block 604) may include rectifying the at least one pair of images such that rows in the at least one pair of images may correspond to each other.

In an embodiment, in case the at least one pair of images accessed at the apparatus 200 are rectified images, the operation of rectification (at block 604) is not required.

At block 604, the at least one pair of image may be rectified to generate a rectified pair of images. In an embodiment, the rectified pair of images may include a first image and a second image. In an example embodiment, the first image 320 and the second image 360 may be examples of the rectified pair of images (FIGURE 3B) corresponding to the at least one pair of images 310, 350 (FIGURE 3A). In an embodiment, the first image and the second image comprises at least one non-redundant portion. For example, if the first image and the second image comprises a right view image and a left view image of the scene, respectively then the first image and the second image may include a substantially same background portion, but certain portion of the first image and the second image may be non-redundant. For example, the right-side portions in the left view image and the left-side portions in the right view image may be non-redundant portions. In an embodiment, the first image and the second image may include a depth information. In an embodiment, the depth information may include a depth of a plurality of object points associated with the first image.

In an embodiment, the stereo pair of images may be associated with a disparity. In an embodiment, the disparity may generate a shift, for example, a left and/or right shift between the stereo pair of images. In an embodiment, a left view image may comprise a left-to-right disparity while a right view image may comprise a right-to-left disparity. In an embodiment, the disparity, such as a left disparity (of the left view image) and/or a right disparity (of the right view image) may be determined based on a matching between object points associated with the stereoscopic pair of images. In an embodiment, the object points associated with the stereoscopic pair of images may include super-pixels. The term 'super-pixel' may refer to a patch comprising a plurality of pixels. In an embodiment, a plurality of super-pixels may split an image into a plurality of smaller patches of regular shapes and comparable sizes.

At block 606, a segmentation of the first image into a plurality of super-pixels may be performed. An example of image segmentation into the plurality of super-pixels is illustrated and explained with reference to FIGURE 3C. In an embodiment, the first image may be segmented based on the depth information associated with the first image.

At block 608, a segmentation of the second image into a corresponding plurality of super-pixels is performed based on the plurality of super-pixels associated with the first image. In an embodiment, for performing matching, the corresponding super-pixel centers needs to be determined appropriately in the second image. In an embodiment, the plurality of super-pixels associated with the first image may be moved from the first image to the second image. A super-pixel segmentation of the second image based on the super-pixel segmentation of the first image is illustrated and described with reference to FIGURE 3C. In an embodiment, moving the super-pixel segmentation of the first image to the second image facilitates in a precise initialization of super-pixel centers in the second image. Due to initialization of super-pixel centers in the second image, only a few iterations of super-pixel segmentation of the second image may be performed, and a sizable computation effort may be saved.

At block 610, a first disparity map of the first image may be computed based on the depth information of the first image and the segmentation of the first image. In an example embodiment, the first disparity map may be indicative of shift of the plurality of super pixels of the first image. For example, if the first image is a right view image, then the disparity map of the first image may indicate a right to left shift of the corresponding super-pixels. An example first disparity map for an example first image is explained and illustrated in FIGURE 4A. In an embodiment, the first disparity map may comprise leaking from higher disparity values in certain non-redundant portions. For example, one or more portions in foreground regions associated with the pair of image may be occluded. The occlusion of the objects associated with a foreground portions of a stereoscopic pair of images is more pronounced in objects that may be quite close to an image capturing device, for example a camera. In an embodiment, the occluded portions may be the regions of interest for disparity computation that may be associated with disparity leaking.

At block 612, at least one region of interest (ROI) in the first image may be determined based on the depth information associated with the first image. For example, the ROI may include portion of the first image having depth less than a threshold depth. In an embodiment, the ROI may include those portions (for example, foreground portions) that may be occluded in one of the pair of stereoscopic pair of images. In an embodiment, such occluded portions may lead to disparity leaking in the disparity map of the associated images. For example, if a left side portion is occluded in the right view image, then the left side portion in the disparity map of the right image may show disparity leaking or fattening. In an embodiment, an effect of occlusion may be negligible in the background portion of the images and may be ignored while computing the disparities. In an embodiment, the at least one ROI in the first image may be determined based on a comparison of the depth of various portions of the first image with a threshold depth. In an example embodiment, depending on the baseline of the media capturing device, the threshold depth may be determined based on a depth measure away from the media capturing device. An example determination of the ROI of the first image is illustrated and described with reference to FIGURE 4B.

In an example embodiment, a plurality of disparity labels may be determined for the plurality of super-pixels of the first image. In an example embodiment, a histogram of the first disparity map corresponding to the first image may be computed such that values of the histogram may refer to an occurrence count of disparity values of the plurality of super-pixels of the first disparity map. In an embodiment, non-zero values of the histogram may provide information of the disparity labels actually present in the scene. In particular, a non-zero value corresponding to a disparity value in the histogram may indicate at least one super-pixel associated with the disparity value. In an embodiment, only disparity labels that are associated with the non-zero histogram values may be utilized in computation of the second disparity map for the second image.

At block 614, a second disparity map of at least one portion in the second image corresponding to the at least one ROI in the first image may be computed. In an embodiment, based on the segmentation of the second image and the first disparity map, the second disparity map may be computed. In an embodiment, the at least one portion in the second image corresponding to the ROI of the first image may be determined by performing a search for the corresponding plurality of super-pixels in the second image based on the depth information of the second image and the threshold depth. In an embodiment, performing a search for corresponding super-pixels in the second image based on the threshold depth may facilitate in reduction of disparity computation on the second image, thereby resulting in significant computational gain without any appreciable drop in disparity map quality. In an embodiment, the second disparity map may include disparity for the at least one ROI of the first image. For example, the second disparity map may include disparity for the foreground regions of the first image. At block 616, the first image and the second image may be warped based on the first disparity map and the second disparity map. For example, the redundant portions such as the background portion of the first image may include substantially same disparity values in the first image and the second image. The disparity values for the non-redundant portions of the first image and the second image may be computed based on method 600, and an optimized depth map for the first image may be determined.

As discussed, the second disparity map is computed for only those portions of the second image that may be associated with depth less than the threshold depth in the first image. Depending on the baseline of the camera, the threshold depth may be determined based on a distance of the objects of the scene from the image capturing device. In an embodiment, the computation of the second disparity map for only ROI may facilitate in computational savings associated with the disparity computations. Additionally, since the first plurality of labels associated with the first image may be assigned to the objects and/or regions of the second image, and no new disparity labels may be determined for the second image, a disparity label search space for global optimization on the second image may be reduced, thereby producing an enormous computational gain. For example, only non-zero values in the disparity histogram may be utilized for computing disparity of the second image thereby reducing a time associated with disparity computation on the second image.

Moreover, in an embodiment, the super-pixel segmentation of the first image is utilized for performing super-pixel segmentation of the second image instead of performing the super-pixel segmentation of the second image by a known method. Utilizing the super-pixels of the first image for segmenting the second image facilitates in substantial reduction of computational effort.

It should be noted that to facilitate discussions of the flowcharts of FIGURE 5 and 6, certain operations are described herein as constituting distinct steps performed in a certain order. Such implementations are examples only and are non-limiting in scope. Certain operation may be grouped together and performed in a single operation, and certain operations can be performed in an order that differs from the order employed in the examples set forth herein. Moreover, certain operations of the methods 500 and 600 are performed in an automated fashion. These operations involve substantially no interaction with the user. Other operations of the methods 500 and 600 may be performed by in a manual fashion or semi-automatic fashion. These operations involve interaction with the user via one or more user interface presentations.

The methods depicted in these flow charts may be executed by, for example, the apparatus 200 of FIGURE 2. Operations of the flowchart, and combinations of operation in the flowcharts, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. These computer program instructions may also be stored in a computer-readable storage memory (as opposed to a transmission medium such as a carrier wave or electromagnetic signal) that may direct a computer or other programmable apparatus to function in a particular manner, such that the instructions stored in the computer-readable memory produce an article of manufacture the execution of which implements the operations specified in the flowchart. The computer program instructions may also be loaded onto a computer or other programmable apparatus to cause a series of operations to be performed on the computer or other programmable apparatus to produce a computer-implemented process such that the instructions, which execute on the computer or other programmable apparatus provide operations for implementing the operations in the flowchart. The operations of the methods are described with help of apparatus 200. However, the operations of the methods can be described and/or practiced by using any other apparatus.

Without in any way limiting the scope, interpretation, or application of the claims appearing below, a technical effect of one or more of the example embodiments disclosed herein is to detect objects in images (for example, in stereoscopic images) of a scene, where there is a disparity between the objects in the images. Various embodiments provide techniques for reducing the computational complexity associated with disparity estimation in stereoscopic images. In some embodiments, non-redundant regions are determined in the pair of stereoscopic images, a first disparity map is generated for one of the pair of stereoscopic images. In an embodiment, a second disparity map is generated only for the non-redundant region associated with the second image and not the whole image. In an embodiment, a final depth map is generated by merging the first disparity and the second disparity map. As the disparity computation in the second image is reduced only to the at least one region corresponding to the ROI of the first image, the final disparity map in the stereoscopic images is determined in a computationally efficient manner. Further, various embodiments offer performing super-pixel segmentation of one of the stereoscopic pair of images, and moving the super-pixel segmentation of the first image onto the second image. Herein, moving the super-pixel segmentation of the first image onto the second image facilitate in reducing the computational burden associated with segmenting the second image into the plurality of super-pixels. Additionally, in various embodiments, a plurality of disparity labels may be determined from the first disparity map, and only non-zero disparity labels associated with the plurality of disparity labels may be utilized while computing the second disparity map. The use of the plurality of disparity labels associated with the first disparity map in computing the second disparity map may facilitate in reduction of time associated with graph cuts method.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 1 and/or 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present disclosure as defined in the appended claims.

**Claims**

1. A method comprising:

   facilitating access of a first image and a second image associated with a scene, the first image and the second image comprising a depth information, the first image and the second image comprising at least one non-redundant portion;
   computing a first disparity map of the first image based on the depth information associated with the first image;
   determining at least one region of interest (ROI) associated with the at least one non-redundant portion in the first image, the at least one ROI being determined based on the depth information associated with the first image;
   computing a second disparity map of at least one region in the second image corresponding to the at least one ROI of the first image; and
   merging the first disparity map and the second disparity map to estimate an optimized depth map of the scene.

2. The method as claimed in claim 1, wherein determining the at least one ROI in the first image comprises determining a region in the first image having depth less than a threshold depth, wherein the depth of the at least one ROI being determined based on the depth information associated with the first image.

3. The method as claimed in claims 1 or 2, wherein the at least one ROI in the first image comprises a foreground portion of the scene.

4. The method as claimed in any of claims 1 to 3, further comprising performing a segmentation of the first image into a plurality of super-pixels.

5. The method as claimed in claim 4, wherein computing the first disparity map comprises determining disparity values between the plurality of super-pixels associated with the first image and a corresponding plurality of super-pixels associated with the second image.

6. The method as claimed in claim 4, further comprising associating a plurality of disparity labels with the plurality of super-pixels.

7. The method as claimed in claims 4 or 6, further comprising performing segmentation of the second image based on the plurality of super-pixels of the first image and the first disparity map to generate a corresponding plurality of super-pixels of the second image.

8. The method as claimed in claim 7, further comprising determining the at least one portion in the second image corresponding to the ROI of the first image, wherein determining the at least one portion in the second image comprises performing a search for the corresponding plurality of super-pixels in the second image based on the depth information of the second image and the threshold depth.

9. The method as claimed in claims 6 or 8, further comprising associating a corresponding plurality of disparity labels with the corresponding plurality of super-pixels of the second image, wherein determining the corresponding plurality of disparity labels comprises:

   computing an occurrence count associated with occurrence of the plurality of super-pixels in the first disparity map; and
   determining disparity labels from the plurality of disparity labels that are associated with non-zero occurrence count, the disparity labels associated with the non-zero occurrence count being the corresponding plurality of disparity labels.

10. The method as claimed in any of claims 1 to 9, wherein the first image and the second image are rectified image.

11. The method as claimed in any of claims 1 to 10, wherein the first image and the second image form a stereoscopic pair of images.

12. An apparatus configured to:

facilitate access of a first image and a second image associated with a scene, the first image and the second image comprising a depth information, the first image and the second image comprising at least one non-redundant portion;

compute a first disparity map of the first image based on the depth information associated with the first image;

determine at least one region of interest (ROI) associated with the at least one non-redundant portion in the first image, the at least one ROI being determined based on the depth information associated with the first image;

compute a second disparity map of at least one region in the second image corresponding to the at least one ROI of the first image; and

merge the first disparity map and the second disparity map to estimate an optimized depth map of the scene.

13. The apparatus as claimed in claim 12, wherein the apparatus is further configured to perform the methods as claimed in any of the claims 2 to 11.

14. The apparatus as claimed in claims 12 or 13, wherein the apparatus comprises a mobile phone.

15. A computer program product comprising program instructions, which when executed by an apparatus cause the apparatus to perform the methods as claimed in any of the claims 1 to 11.

FIGURE 1

EP 2 874 395 A2

FIGURE 2

FIGURE 3A

FIGURE 3B

FIGURE 3D

FIGURE 3C

FIGURE 4A

FIGURE 4B

FIGURE 4C

FIGURE 4D

Facilitate access of a first image and a second image associated with a scene, the first image and the second image comprising a depth information, the first image and the second image comprising at least one non-redundant portion — 502

Compute a first disparity map of the first image based on the depth information associated with the first image — 504

Determine at least one region of interest (ROI) associated with the at least one non-redundant portion in the first image, the at least one ROI being determined based on the depth information associated with the first image — 506

Compute a second disparity map of at least one region in the second image corresponding to the at least one ROI of the first image — 508

Merge the first disparity map and the second disparity map to estimate an optimized depth map of the scene — 510

500

FIGURE 5

EP 2 874 395 A2

| Facilitate access of at least one pair of images, the at least one pair of images being stereoscopic images | 602 |

| Rectify the at least one pair of images to generate a rectified at least one pair of images, the rectified at least one pair of images comprising a first image and a second image, the first image and the second image comprising a depth information | 604 |

| Perform segmentation of the first image into a plurality of super-pixels | 606 |

| Perform segmentation of the second image into a corresponding plurality of super-pixels based on the plurality of super-pixels | 608 |

| Compute a first disparity map of the first image based on the plurality of super-pixels of the first image and the corresponding plurality of super-pixels of the second image | 610 |

| Determine at least one region of interest (ROI) in the first image based on the depth information associated with the first image, the at least one ROI having a depth less than a threshold depth | 612 |

| Compute a second disparity map of at lease one portion in the second image corresponding to the at least one ROI of the first image based at least on the first disparity map | 614 |

| Warp the first image and the second image based on the first disparity map and the second disparity map | 616 |

600

FIGURE 6